(19) Europäisches Patentamt / European Patent Office / Office européen des brevets

(11) **EP 3 798 913 A1**

(12) **EUROPEAN PATENT APPLICATION**

(43) Date of publication:
31.03.2021 Bulletin 2021/13

(51) Int Cl.:
*G06N 3/04* (2006.01)    *G06N 3/08* (2006.01)

(21) Application number: 19199318.7

(22) Date of filing: 24.09.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicants:
- **Robert Bosch GmbH**
  **70442 Stuttgart (DE)**
- **Carnegie Mellon University**
  **Pittsburgh, PA 15213 (US)**

(72) Inventors:
- **Kolter, Jeremy Zieg**
  **Pittsburgh, PA 15217 (US)**
- **Schmidt, Frank**
  **70439 Stuttgart (DE)**
- **Wong, Eric**
  **Lexington, MA 02420 (US)**
- **Rice, Leslie**
  **Pittsburgh, PA15213 (US)**

(74) Representative: **Bee, Joachim**
  **Robert Bosch GmbH**
  **C/IPE**
  **Wernerstrasse 1**
  **70469 Stuttgart (DE)**

(54) **DEVICE AND METHOD TO IMPROVE THE ROBUSTNESS AGAINST ADVERSARIAL EXAMPLES**

(57)     A computer-implemented method for training a classifier (60) for classifying input signals (x) obtained from a sensor (30), comprising the steps of:
- accessing, from a memory (146), the classifier (60), including providing initial values of parameters ($\phi$) characterizing said classifier (60);
- providing a set of training data comprising pairs of training input signals ($x_i$) and corresponding training output signals ($y_i$);
- initializing a set of perturbations ($\delta_i$) corresponding to each one of said training input signals ($x_i$);
- performing a first plurality of training epochs, each epoch comprising a second plurality ($N$) of training steps for each input signal ($x_i$), each of said training steps comprising
- providing one of said input signals ($x_i$);

- providing an adversarial input signal $\left(x_i^{adv}\right)$ depending on said input signal ($x_i$) and the perturbation ($\delta_i$) that corresponds to said provided input signal ($x_i$);
- updating the perturbation ($\delta_i$) based on its value from the previous epoch and a value that characterizes a gradient with respect to said perturbation ($\delta_i$) to a loss function ($\ell$) which characterizes a difference between the output signal provided by said classifier (60) if inputted said adversarial input signal $\left(x_i^{adv}\right)$ and the training output signal ($y_i$);
- freezing the value of said updated perturbation ($\delta_i$) until its update in the next epoch;
- updating said parameters ($\phi$) depending on a gradient with respect to said parameters ($\phi$) of said loss function ($\ell$).

EP 3 798 913 A1

**Fig. 9**

**Description**

The invention concerns a method for obtaining an adversarial input signal, a method for using and/or training a classifier, a method for assessing a robustness of said classifier, and a method for operating an actuator, a computer program and a machine-readable storage medium, a classifier, a control system, and a training system.

Prior art

US10007866 BB discloses a method comprising: accessing, from a memory, a neural network image classifier, the neural network image classifier having been trained using a plurality of training images from an input space, the training images being labeled for a plurality of classes;
computing a plurality of adversarial images by, for each adversarial image, searching a region in the input space around one of the training images, the region being one in which the neural network is linear, to find an image which is incorrectly classified into the plurality of classes by the neural network;
applying the training image to the neural network and observing a response of the neural network;
computing a constraint system which represents the input space using the observed response; and
further training the neural network image classifier to have improved accuracy using at least the adversarial images.
"Defending Against Universal Perturbations With Shared Adversarial Training", arXiv preprint 1812.03705 v2, Jan Hendrik Metzen, have shown that adversarial training is more effective in preventing universal perturbations, where the same perturbation needs to fool a classifier on many inputs, thus making universal perturbations that fool a model hardened with adversarial training become clearly perceptible and show patterns of the target scene.
Ian J Goodfellow, Jonathon Shlens, and Christian Szegedy. Explaining and harnessing adversarial examples. arXiv preprint arXiv:1412.6572, 2014, discloses a method to generate adversarial examples using a single gradient step called the Fast Gradient Sign Method (FGSM), which was used as an early form of adversarial training (training on examples perturbed by FGSM).
Alexey Kurakin, Ian Goodfellow, and Samy Bengio. Adversarial examples in the physical world. arXiv preprint arXiv:1607.02533, 2016, discloses a method in which the adversary was improved to the Basic Iterative Method, which takes multiple, smaller FGSM steps. Aleksander Madry, Aleksandar Makelov, Ludwig Schmidt, Dimitris Tsipras, and Adrian Vladu, Towards deep learning models resistant to adversarial attacks. arXiv preprint arXiv:1706.06083, 2017, discloses a method also referred to as a PGD adversary, the attack was further strengthened by adding multiple random restarts and incorporated into the adversarial training procedure, forming the basis of what is widely understood today to be adversarial training, an effective method for learning robust networks. Since then, the PGD attack (and its corresponding adversarial training defense) have been augmented with various techniques, such as incorporating optimization tricks like momentum to improve the adversary as disclosed in "Boosting Adversarial Attacks with Momentum", Yinpeng Dong, Fangzhou Liao, Tianyu Pang, Hang Su, Jun Zhu, Xiaolin Hu, Jianguo Li arXiv preprint arXiv:1710.06081v3, 2018 combining it with other heuristic defenses like matrix estimation as disclosed in Yuzhe Yang, Guo Zhang, Dina Katabi, and Zhi Xu. Me-net: Towards effective adversarial robustness with matrix estimation. arXiv preprint arXiv:1905.11971, 2019.or logit pairing as disclosed in Marius Mosbach, Maksym Andriushchenko, Thomas Trost, Matthias Hein, and Dietrich Klakow, Logit pairing methods can fool gradient-based attacks. arXiv preprint arXiv:1810.12042, 2018.
Ali Shafahi, Mahyar Najibi, Amin Ghiasi, Zheng Xu, John Dickerson, Christoph Studer, Larry S Davis, Gavin Taylor, and Tom Goldstein. Adversarial training for free! arXiv preprint arXiv:1904.12843, 2019, instead propose "free" adversarial training. It consists of taking FGSM steps with full step sizes followed by updating the model weights for a predefined number of iterations on the same minibatch (also referred to as "minibatch replays"). Although "free" adversarial training is reported to be faster than the standard PGD based adversarial training, it is not as fast as desirable. In this publication, it is necessary to run over 200 epochs in over 10 hours to learn a robust CIFAR10 classifier and two days to learn a robust ImageNet classifier.
Further training methods for training neural networks are disclosed in Cody Coleman, Deepak Narayanan, Daniel Kang, Tian Zhao, Jian Zhang, Luigi Nardi, Peter Bailis, Kunle Olukotun, Chris Re, and Matei Zaharia. Dawnbench: An end-to-end deep learning benchmark and competition. Training, 100(101):102, 2017,and "Super-Convergence: Very Fast Training of Neural Networks Using Large Learning Rates", Leslie N. Smith, Nicholay Topin, arXiv preprint arXiv:1708.07120 and Paulius Micikevicius, Sharan Narang, Jonah Alben, Gregory Diamos, Erich Elsen, David Garcia, Boris Ginsburg, Michael Houston, Oleksii Kuchaiev, Ganesh Venkatesh, et al. Mixed precision training. arXiv preprint arXiv:1710.03740, 2017.
"Training GANs with Optimism", arXiv preprint 1711.00141v2, Constantinos Daskalakis, Andrew Ilyas, Vasilis Syrgkanis, Haoyang Zeng discloses an optimization algorithm called *Optimistic ADAM* for training of Wasserstein Generative Adversarial Networks. This algorithm is motivated by the observation that optimistic mirror decent can enjoy faster regret rates in the context of zero-sum games, because the training of generator and detector of said Generative Adversarial Network corresponds to such a zero-sum game. This algorithm is disclosed on page 8 of said reference as Algorithm 1 and is hereby incorporated into this disclosure by reference.

Further optimizers are known from e.g. GM Korpelevich. The extragradient method for finding saddle points and other problems. Matecon, 12:747-756, 1976.

Advantages of the invention

Classifiers, like e.g. neural network classification systems can easily be fooled. It is well known that classifiers which may be based on deep learning may be sensitive to small perturbations. In order to deploy such systems in the physical world it is important to harden such classifiers against such attacks, e.g. by suitable training methods. Such hardened classifiers are also known as robust classifiers. Hence, the goal here is to learn a classifier which is not only accurate on the data, but also accurate on adversarially perturbed versions of the data.

To this end, a number of defenses have been proposed to improve the robustness of classifiers such as deep networks and mitigate the problem. Such approaches come at a non-trivial, additional computational cost, often increasing training time by an order of magnitude.

It is therefore desirable to reduce the complexity of adversarial training, where the bulk of the additional computation comes from the generation of an adversarial example. The method with the feature of independent claim 1 drastically increases the speed at which robust classifiers can be adversarially trained. Because there is a natural trade-off between the speed of adversarial training and the robustness that can be achieved, such increases in speed are of tremendous practical importance for applications like e.g. controlling an at least semi-autonomous robot like e.g. a vehicle based on the output signal of said classifier.

Disclosure of the invention

In a first aspect, the invention therefore is concerned with a computer-implemented method for training a classifier for classifying input signals obtained from a sensor, comprising the steps of:

- accessing, from a memory, the classifier, including providing initial values of parameters characterizing said classifier;
- providing a set of training data comprising pairs of training input signals $x_i$ and corresponding training output signals $y_i$;
- initializing a set of perturbations $\delta_i$ corresponding to each one of said training input signals $x_i$ which characterize a difference between said adversarial signals $x_i^{adv}$ and said input signals $x_i$;
- performing a first plurality of training epochs, i.e. training iterations over the entire set of training data, each epoch comprising a second plurality of training steps for each input signal $x_i$, each of said training steps comprising
- providing one of said input signals $x_i$ (wherein within the same epoch the provided input signals between different training steps are pairwise different);
- providing an adversarial input signal $x_i^{adv}$ depending on said input signal $x_i$ and the perturbation $\delta_i$ that corresponds to said provided input signal $x_i$;
- updating the perturbation $\delta_i$ based on its value from the previous epoch (wherein the initialization is understood to correspond to a zero epoch in case the present epoch is the first training epoch) and a value that characterizes a gradient with respect to said perturbation $\delta_i$ to a loss function $\ell$ which characterizes a difference between the output signal provided by said classifier if inputted said adversarial input signal $x_i^{adv}$ and the training output signal $y_i$ that corresponds to the provided one of said input signals $x_i$;
- freezing the value of said updated perturbation $\delta_i$ until its update in the next epoch; and
- updating said parameters depending on a gradient with respect to said parameters of said loss function $\ell$.

Said step of updating the perturbation $\delta_i$ may comprise single-step updates as well as multi-step updates. Furthermore, it is understood by the person having skill in the art that the term "classifying sensor signals" in the context of image signals comprises actions such as detecting objects in said image signal (because it corresponds to a classification to e.g. either one of the classes which may be described as "object" and "no object") and/or providing a pixel-wise classification, also known as a semantic segmentation, of said image.

In other words, it has been found out that in order to more quickly learn robust classifiers, it is possible to strengthen the adversary by caching the intermediate perturbations calculated for each input signal, and using the cached perturbation as the starting point for the next epoch.

Said intitialization of said set of perturbations $\delta_i$ preferably is a random initialization. This has the effect of increasing the robustness of the trained neural network. That is because in case the gradient with respect to said parameters of said loss function $\ell$ is small, as may arise naturally or because a method such as one known in the art as "gradient masking" has been used, said perturbation $\delta_i$ is much more likely to quickly yield an adversarial example.

Preferably, in case said input signals are images, said random initializations are sampled from i.i.d. Gaussians for each pixel.

To specifically strengthen the classifier against attacks which are hard to discover, it may be envisioned to provide that said updating of said perturbation $\delta_i$ changes said perturbation by at most a predefinable positive amount $\varepsilon$, which may be achieved by a projection of said perturbation $\delta_i$ onto a ball with radius $\varepsilon$.

In case said pixelwise random initialization is sampled from Gaussians with standard distribution equal to said radius $\varepsilon$, the method is accelerated even further, because the expected $L^2$-norm of said randomly initialized perturbation $\delta_i$ is then equal to said radius $\varepsilon$.

To further increase the speed with surprisingly little loss of robustness, it may be further envisioned that said updating of said perturbation $\delta_i$ involves only a single step by said predefinable amount $\varepsilon$ in the direction of a sign of said gradient with respect to said perturbation $\delta_i$.

In an additional or alternative aspect of the invention, it may be envisioned that the updating of said parameters it carried out by the Optimistic ADAM algorithm. Despite the fact that adversarial training is not a zero-sum game, surprisingly this algorithm leads to further speed-up of the adversarial training procedure. This can be reasoned to be the case because the mathematical structure of adversarial training problem is actually similar to that of GAN training, in the sense that both problems can be reformulated as the problem of finding saddle points.

As an alternative to said Optimistic Adam algorithm it may be envisioned that the updating of said parameters comprises the steps of:

- updating said parameters to intermediate parameter values $u$ depending on a gradient with respect to said parameters $\theta$ of said loss function $\ell$ which is evaluated based on said classifier being parameterized by the values of said parameters prior to said updating; and
- updating said parameters from said intermediate parameter values $u$ depending on a gradient with respect to said parameters of said loss function $\ell$ which is evaluated based on said classifier (60) being parameterized by said parameters equal to said intermediate parameter values $u$.

Such an updating procedure also leads to a further speed-up.

In a further aspect of the invention, it may be envisioned that a learning rate that parameterizes a step size during said updating of said parameters is selected to monotonically increase between epochs in a first phase and then to monotonically decrease between epochs in a subsequent second phase. Such choice of learning rate also surprisingly leads to an even further speed-up.

Said first phase and second phase may also be concatenated, leading to the learning rate being increased and then decreased over several cycles.

In further aspects of the invention, it is envisioned to use said classifier trained with one of the above methods by a method comprising the steps of:

- receiving a sensor signal comprising data from a sensor,
- determining an input signal which depends on said sensor signal, and
- feeding said input signal into said classifier to obtain an output signal that characterizes a classification of said input signal.

Said classifier, e.g. a neural network, may be endowed with such structure that it is trainable to identify and distinguish e.g. pedestrians and/or vehicles and/or road signs and/or traffic lights and/or road surfaces and/or human faces and/or medical anomalies in imaging sensor images. Alternatively, said classifier, e.g. a neural network, may be endowed with such structure that is trainable to identify spoken commands in audio sensor signals.

Such robust classifiers may then be used for providing an actuator control signal for controlling an actuator, comprising all the steps of the above method and further comprising the step of:

- determining said actuator control signal depending on said output signal Preferably said actuator controls an at least partially autonomous robot and/or a manufacturing machine and/or an access control system.

Additionally or alternatively, training of said classifier may be envisioned to be carried out before deployment of said classifier. However, in further aspects of the invention, it may be envisioned that new data may be accumulated during the operation of said classifier, and robust training of said classifier depending on said accumulated data is conceivable. For example, it may be envisioned to send sensor signals, like e.g. images, that could not be classified with sufficient reliability (e.g. because an output of a softmax layer of a neural network shows two top results which are closer to each other than a predefined margin) to a remote server, receive from said remote server a target classification (for example a classification by a human expert) and use above method to train said classifier robustly. Because computing resources in such applications are typically scarce, the speed-up of the training that can be achieved with this training method is essential to obtain a robust classifier.

Embodiments of the invention will be discussed with reference to the following figures in more detail. The figures show:

Figure 1   a control system having a classifier controlling an actuator in its environment;

Figure 2   the control system controlling an at least partially autonomous robot;

Figure 3   the control system controlling a manufacturing machine;

Figure 4   the control system controlling an automated personal assistant;

Figure 5   the control system controlling an access control system;

Figure 6   the control system controlling a surveillance system;

Figure 7   the control system controlling an imaging system;

Figure 8   a training system for controlling the classifier;

Figure 9   a flow-chart diagram of a training method carried out by said training system.

Description of the embodiments

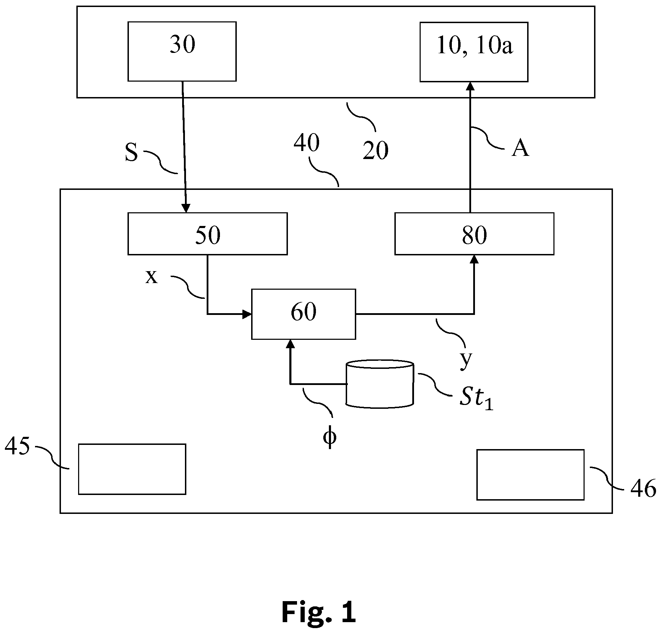

Shown in figure 1 is one embodiment of an actuator 10 in its environment 20. Actuator 10 interacts with a control system 40. Actuator 10 and its environment 20 will be jointly called actuator system. At preferably evenly spaced distances, a sensor 30 senses a condition of the actuator system. The sensor 30 may comprise several sensors. Preferably, sensor 30 is an optical sensor that takes images of the environment 20. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator 10.

Control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to an image classifier 60, which may, for example, be given by an artificial neural network.

Classifier 60 is parametrized by parameters $\phi$, which are stored in and provided by parameter storage $St_1$.

Classifier 60 determines output signals y from input signals x. The output signal y comprises information that assigns one or more labels to the input signal x. Output signals y are transmitted to an optional conversion unit 80, which converts the output signals y into the control commands A. Actuator control commands A are then transmitted to actuator 10 for controlling actuator 10 accordingly. Alternatively, output signals y may directly be taken as control commands A.

Actuator 10 receives actuator control commands A, is controlled accordingly and carries out an action corresponding to actuator control commands A. Actuator 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

In one embodiment classifier 60 may be designed to identify lanes on a road ahead, e.g. by classifying a road surface and markings on said road, and identifying lanes as patches of road surface between said markings. Based on an output of a navigation system, a suitable lane for pursuing a chosen path can then be selected, and depending on a present lane and said target lane, it may then be decided whether vehicle 60 is to switch lanes or stay in said present lane. Control command A may then be computed by e.g. retrieving a predefined motion pattern from a database corresponding to said identified action.

Likewise, upon identifying road signs or traffic lights, depending on an identified type of road sign or an identified state of said traffic lights, corresponding constraints on possible motion patterns of vehicle 60 may then be retrieved from e.g. a database, a future path of vehicle 60 commensurate with said constraints may be computed, and said actuator control command A may be computed to steer the vehicle such as to execute said trajectory.

Likewise, upon identifying pedestrians and/or vehicles, a projected future behavior of said pedestrians and/or vehicles may be estimated, and based on said estimated future behavior, a trajectory may then be selected such as to avoid collision with said pedestrian and/or said vehicle, and said actuator control command A may be computed to steer the vehicle such as to execute said trajectory.

In still further embodiments, it may be envisioned that control system 40 controls a display 10a instead of an actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

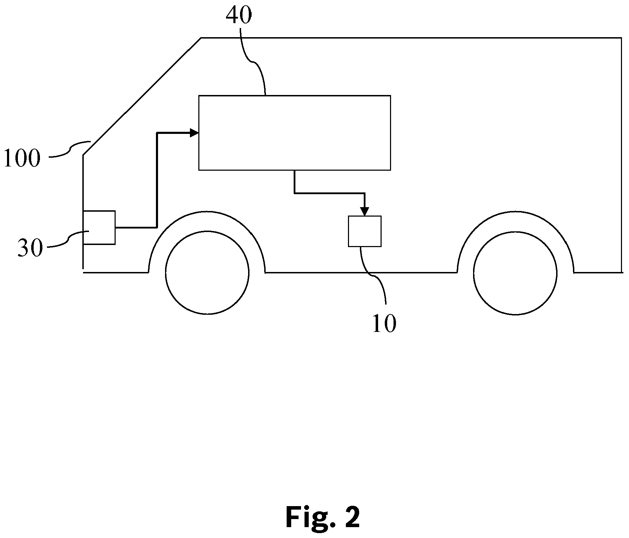

Figure 2 shows an embodiment in which control system 40 is used to control an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

For example, using input signal x, the classifier 60 may for example detect objects in the vicinity of the at least partially autonomous robot. Output signal y may comprise an information which characterizes where objects are located in the vicinity of the at least partially autonomous robot. Control command A may then be determined in accordance with this information, for example to avoid collisions with said detected objects.

Actuator 10, which is preferably integrated in vehicle 100, may be given by a brake, a propulsion system, an engine, a drivetrain, or a steering of vehicle 100. Actuator control commands A may be determined such that actuator (or actuators) 10 is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator 10 may be a nozzle for spraying chemicals. Depending on an identified species and/or an identified state of the plants, an actuator control command A may be determined to cause actuator 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

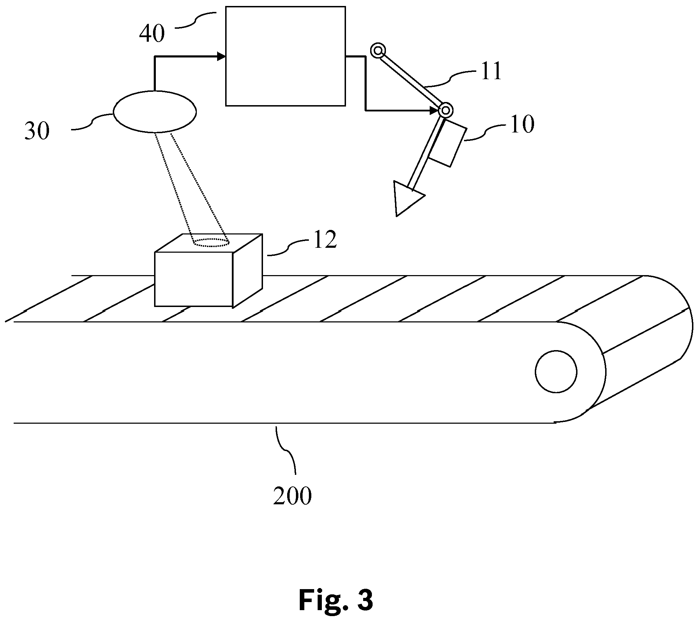

Shown in figure 3 is an embodiment in which control system 40 is used to control a manufacturing machine 11, e.g. a punch cutter, a cutter or a gun drill) of a manufacturing system 200, e.g. as part of a production line. The control system 40 controls an actuator 10 which in turn control the manufacturing machine 11. Sensor 30 may be given by an optical sensor which captures properties of e.g. a manufactured product 12. Classifier 60 may determine a state of the manufactured product 12 from these captured properties. Actuator 10 which controls manufacturing machine 11 may then be controlled depending on the determined state of the manufactured product 12 for a subsequent manufacturing step of manufactured product 12. Or, it may be envisioned that actuator 10 is controlled during manufacturing of a subsequent manufactured product 12 depending on the determined state of the manufactured product 12.

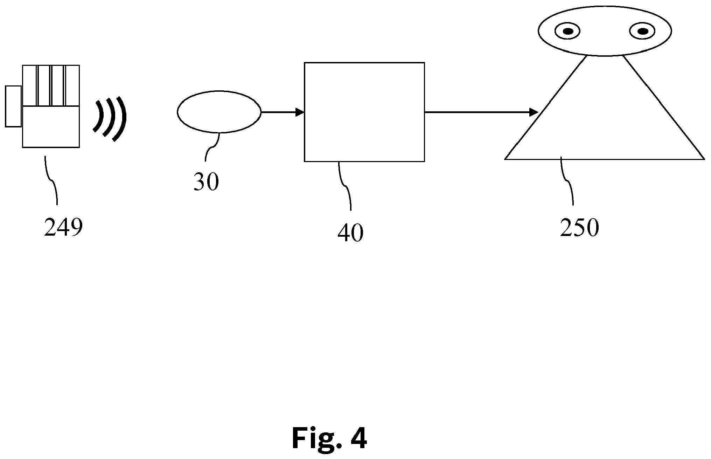

Shown in figure 4 is an embodiment in which control system 40 is used for controlling an automated personal assistant 250. Sensor 30 may be an optic sensor, e.g. for receiving video images of a gestures of user 249. Alternatively, sensor 30 may also be an audio sensor e.g. for receiving a voice command of user 249.

Control system 40 then determines actuator control commands A for controlling the automated personal assistant 250. The actuator control commands A are determined in accordance with sensor signal S of sensor 30. Sensor signal S is transmitted to the control system 40. For example, classifier 60 may be configured to e.g. carry out a gesture recognition algorithm to identify a gesture made by user 249. Control system 40 may then determine an actuator control command A for transmission to the automated personal assistant 250. It then transmits said actuator control command A to the automated personal assistant 250.

For example, actuator control command A may be determined in accordance with the identified user gesture recognized by classifier 60. It may then comprise information that causes the automated personal assistant 250 to retrieve information from a database and output this retrieved information in a form suitable for reception by user 249.

In further embodiments, it may be envisioned that instead of the automated personal assistant 250, control system 40 controls a domestic appliance (not shown) controlled in accordance with the identified user gesture. The domestic appliance may be a washing machine, a stove, an oven, a microwave or a dishwasher.

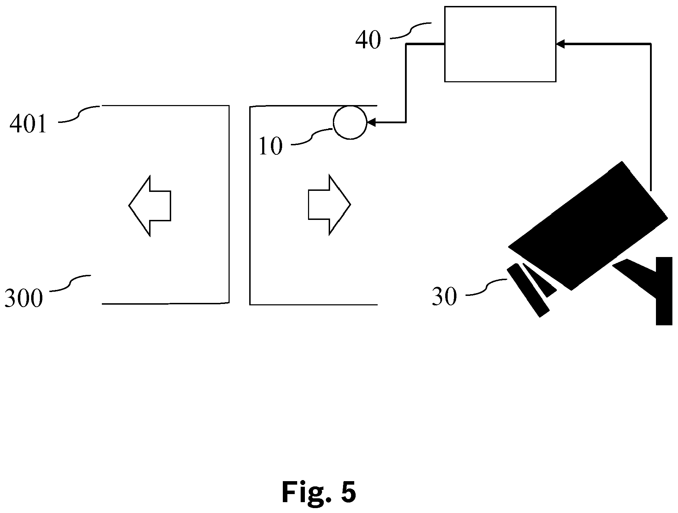

Shown in figure 5 is an embodiment in which control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Classifier 60 may be configured to interpret this image or video data e.g. by matching identities with known people stored in a database, thereby determining an identity of the person. Actuator control signal A may then be determined depending on the interpretation of classifier 60, e.g. in accordance with the determined identity. Actuator 10 may be a lock which grants access or not depending on actuator control signal A. A non-physical, logical access control is also possible.

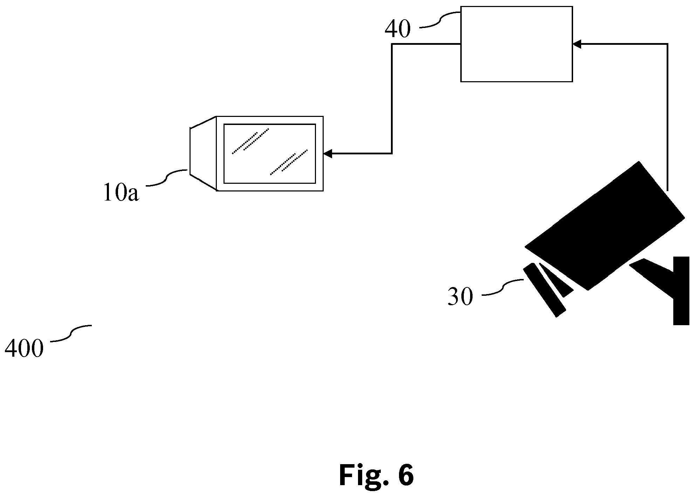

Shown in figure 6 is an embodiment in which control system 40 controls a surveillance system 400. This embodiment is largely identical to the embodiment shown in figure 5. Therefore, only the differing aspects will be described in detail. Sensor 30 is configured to detect a scene that is under surveillance. Control system does not necessarily control an actuator 10, but a display 10a. For example, the machine learning system 60 may determine a classification of a scene, e.g. whether the scene detected by optical sensor 30 is suspicious. Actuator control signal A which is transmitted to display 10a may then e.g. be configured to cause display 10a to adjust the displayed content dependent on the determined classification, e.g. to highlight an object that is deemed suspicious by machine learning system 60.

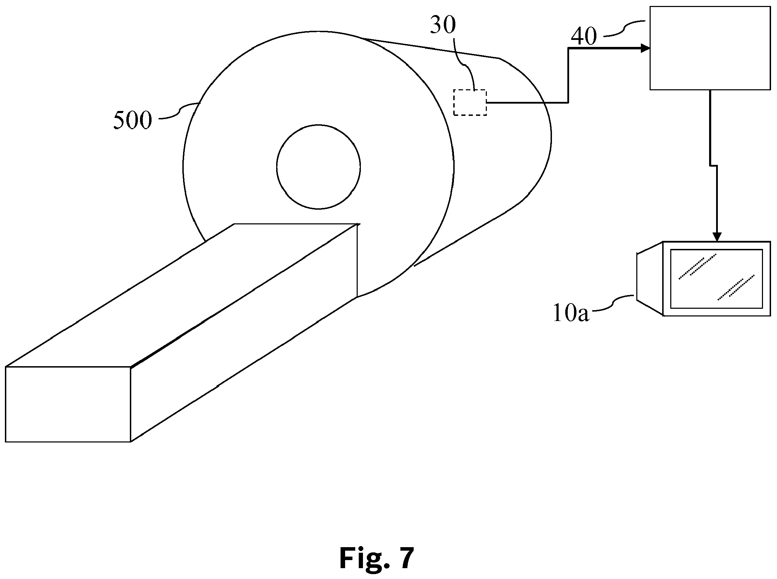

Shown in figure 7 is an embodiment of a control system 40 for controlling an imaging system 500, for example an MRI apparatus, x-ray imaging apparatus or ultrasonic imaging apparatus. Sensor 30 may, for example, be an imaging sensor. Machine learning system 60 may then determine a classification of all or part of the sensed image. Actuator control signal A may then be chosen in accordance with this classification, thereby controlling display 10a. For example, machine learning system 60 may interpret a region of the sensed image to be potentially anomalous. In this case, actuator control signal A may be determined to cause display 10a to display the imaging and highlighting the potentially anomalous region.

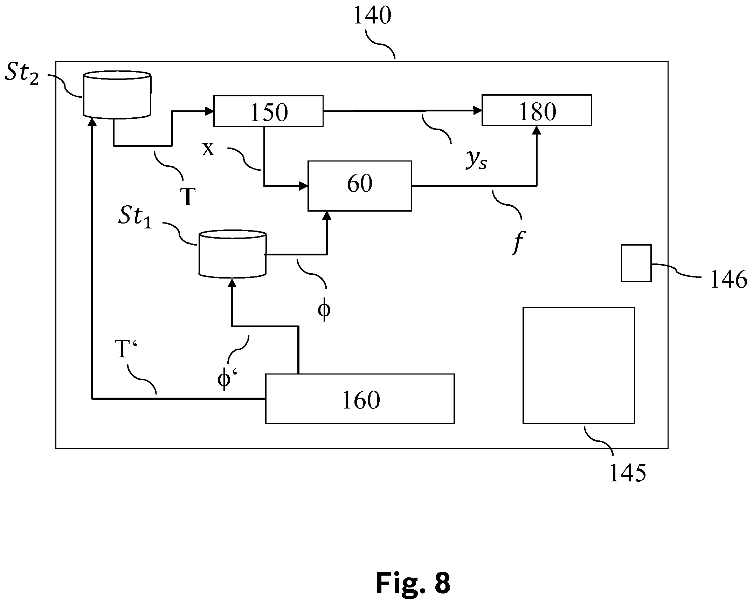

Shown in figure 8 is an embodiment of a training system 140 for training classifier 60. A training data unit 150 determines input signals x, which are passed on to classifier 60. For example, training data unit 150 may access a computer implemented database $St_2$ in which a set T of training data is stored. Set T comprises pairs of input signal $x_i$ and corresponding desired output signal $y_i$. Training data unit 150 generates perturbations $\delta_i$ to provide an adversarial input signal $x_i^{adv} = x_i + \delta_i$. Adversarial input signal $x_i^{adv}$ is passed on to classifier 60. Desired output signal $y_i$ is passed on to assessment unit 180.

Classifier 60 is configured to compute output signals f from input signal $x_i^{adv}$. These output signals f are also passed on to assessment unit 180.

A modification unit 160 determines updated parameters φ' depending on input from assessment unit 180. Updated parameters φ' are transmitted to parameter storage $St_1$ to replace present parameters φ.

Furthermore, training system 140 may comprise a processor 145 (or a plurality of processors) and at least one machine-readable storage medium 146 on which instructions are stored which, if carried out, cause control system 140 to carry out a method according to one aspect of the invention.

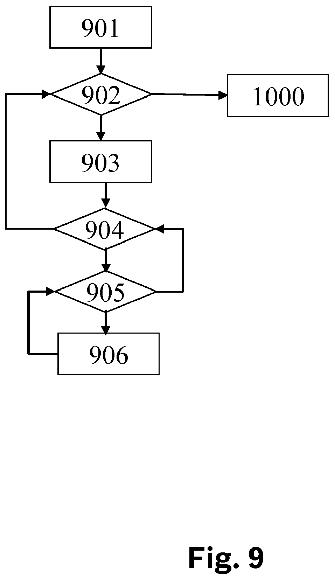

Shown in figure 9 is a flow-chart diagram of an embodiment of the method for training classifier 60, what may be implemented by training system 140.

First (901), for each data sample i in set T, a corresponding perturbation $\delta_i$ is initialized randomly, or, in a separate embodiment, as $\delta_i = 0$.

Then (902), the training method is executed over a predefined number of epochs. The present epoch is indicated by an index t. To this end, it is checked whether the predefined number of epochs has been exceeded, in which case the method ends (1000). If not, a corresponding learning rate $\eta_t$ is selected (903) depending on the epoch. Preferably, in a first phase, the learning rate $\eta_t$ is increased with every epoch, and then, in a second phase, the learning rate $\eta_t$ is decreased with every epoch. For example, it may be envisioned that the first phase lasts for 10 epochs, linearly scaling $\eta_t$ up from $\eta_t = 0.0001$ to $\eta_t = 0.1$, and that the second phase lasts for the remaining epochs, e.g. 40 epochs, linearly scaling $\eta_t$ back down to $\eta_t = 0.0001$ again.

Then (904) a sweep over all data samples of dataset T is executed. The samples are labeled by index i. To this end, it is checked whether the sweep is complete. If so, the next epoch is initiated (902). If not, a predefined number of number of update steps are carried out, which are labeled by index $j$. It is checked (905) if the predefined number of update steps is completed, and if so, the method moves on to the next sample $i$ (904). If not (905), the perturbation $\delta_i$ is updated with e.g. a fast gradient sign step of predefined step size $\varepsilon$, i.e.

$$\delta_i = \delta_i + \epsilon \cdot sign\left(\nabla_\delta \ell\big(f_\phi(x_i + \delta_i), y_i\big)\right) \qquad (1)$$

and projected back onto a sphere of radius $\varepsilon$, e.g.

$$\delta_i = \max(\min(\delta_i, \epsilon), -\epsilon) \qquad (2)$$

The adversarial $x_i^{adv}$ is then computed as

$$x_i^{adv} = x_i + \delta_i \qquad (3)$$

Parameters $\phi$ are then updated with an optimizer, e.g. stochastic gradient descent, as

$$\phi \leftarrow \phi - \eta_t \cdot \nabla_\phi(f_\phi(f\big(x_i^{adv}\big), y_i)) \qquad (4)$$

The method then skips to the next sample.

Alternatively, instead of updating parameters $\phi$ in a single step in equation (4), it may be envisioned to split the learning rate $\eta_t$ into two separate learning rates $\eta_{t,1}$ and $\eta_{t,2}$ and update parameters $\phi$ in two separate steps via

$$u = \phi - \eta_{t,1} \cdot \nabla_\phi(f_\phi(f\big(x_i^{adv}\big), y_i)) \qquad (4a)$$

$$\phi \leftarrow \phi - \eta_t \cdot \nabla_\phi(f_u(f\big(x_i^{adv}\big), y_i)) \qquad (4b).$$

In another embodiment, in step 901, first and second moment variables $m_i$ and $v_i$ are initialized as $m_i = v_i = 0$. In step 905, using the abbreviated notation $\nabla = \nabla_\phi(f_\phi(f\big(x_i^{adv}\big), y_i)$, instead of the parameter update in step (4) the moments are updated as

$$m^{'} = m, v^{'} = v \qquad (4c)$$

$$m \leftarrow (\beta_1 m + (1 - \beta_1)\nabla)/(1 - \beta_1) \qquad (4d)$$

$$v \leftarrow (\beta_2 v + (1 - \beta_2)\nabla^2)/(1 - \beta_2) \qquad (4e)$$

For predefined parameters $\beta_1$, $\beta_2$ and the parameters $\phi$ are updated via

$$\phi \leftarrow \phi - 2\frac{\eta_t m}{\sqrt{v}+\gamma} + \frac{\eta_t m'}{\sqrt{v'}+\gamma} \qquad (4f)$$

for a predefined parameter $\gamma$. The parameter update using steps (4c) ... (4f) is also known as Optimistic ADAM. This concludes the method.

If processor 145 is a GPU with tensor cores capable of performing rapid half-precision calculations (i.e. faster than full-precision calculations), preferably the above method is carried out using mixed-precision arithmetic which provides significant speed-up.

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.

**Claims**

1. A computer-implemented method for training a classifier (60) for classifying input signals (x) obtained from a sensor (30), comprising the steps of:

   - accessing, from a memory (146), the classifier (60), including providing initial values of parameters ($\phi$) characterizing said classifier (60);
   - providing a set of training data comprising pairs of training input signals ($x_i$) and corresponding training output signals ($y_i$);
   - initializing a set of perturbations ($\delta_i$) corresponding to each one of said training input signals ($x_i$);
   - performing a first plurality of training epochs, each epoch comprising a second plurality ($N$) of training steps for each input signal ($x_i$), each of said training steps comprising

      - providing one of said input signals ($x_i$);
      - providing an adversarial input signal $\left(x_i^{adv}\right)$ depending on said input signal ($x_i$) and the perturbation ($\delta_i$) that corresponds to said provided input signal ($x_i$);
      - updating the perturbation ($\delta_i$) based on its value from the previous epoch and a value that characterizes a gradient with respect to said perturbation ($\delta_i$) to a loss function ($\ell$) which characterizes a difference between the output signal provided by said classifier (60) if inputted said adversarial input signal $\left(x_i^{adv}\right)$ and the training output signal ($y_i$);
      - freezing the value of said updated perturbation ($\delta_i$) until its update in the next epoch;
      - updating said parameters ($\phi$) depending on a gradient with respect to said parameters ($\phi$) of said loss function ($\ell$).

2. The method according to claim 1, wherein said intitialization of said set of perturbations ($\delta_i$) is a random initialization.

3. The method according to claim 1 or 2, wherein said updating of said perturbation ($\delta_i$) changes said perturbation by at most a predefinable amount ($\varepsilon$).

4. The method according to claim 3, wherein said updating of said perturbation ($\delta_i$) involves a single step by said predefinable amount ($\varepsilon$) in the direction of a sign of said gradient with respect to said perturbation ($\delta_i$).

5. The method according to any one of claims 1 to 4, wherein the updating of said parameters ($\phi$) it carried out by the Optimistic ADAM algorithm.

6. The method according to any one claims 1 to 4, wherein the updating of said parameters ($\phi$) comprises the steps of:

   - updating said parameters ($\phi$) to intermediate parameter values ($u$) depending on a gradient with respect to said parameters ($\phi$)) of said loss function ($\ell$) which is evaluated based on said classifier (60) being parameterized by the values of said parameters ($\phi$) prior to said updating; and
   - updating said parameters ($\phi$) from said intermediate parameter values ($u$) depending on a gradient with respect to said parameters ($\phi$) of said loss function ($\ell$) which is evaluated based on said classifier (60) being parameterized by said parameters ($\phi$) equal to said intermediate parameter values ($u$).

7. The method according to any one of the preceding claims, wherein a learning rate $\eta_t$ that parameterizes a step size during said updating of said parameters ($\phi$) is selected to monotonically increase between epochs ($t$) in a first phase and then to monotonically decrease between epochs ($t$) in a subsequent second phase.

8. A computer-implemented method for using a classifier (60) for classifying sensor signals, wherein said classifier (60) is trained with the method according to any one of claims 1 to 7, comprising the steps of:

   - receiving a sensor signal (S) comprising data from a sensor (30),
   - determining an input signal (x) which depends on said sensor signal (S), and
   - feeding said input signal (x) into said classifier (60) to obtain an output signal (y) that characterizes a classification of said input signal (x).

9. A computer-implemented method for using a classifier (60) trained with the method according to any one of claims 1 to 7 for providing an actuator control signal (A) for controlling an actuator (10), comprising all the steps of the method according to claim 8 and further comprising the step of:

   - determining said actuator control signal (A) depending on said output signal (y).

10. The method according to claims 9, in which said actuator (10) controls an at least partially autonomous robot (100) and/or a manufacturing machine (200)) and/or an access control system (300).

11. Computer program that is configured to cause a computer to carry out the method according to any one of claims 1 to 10 with all of its steps if the computer program is carried out by a processor (45, 145).

12. Machine-readable storage medium (46, 146) on which the computer program according to claim 11 is stored.

13. Control system (40) for operating an actuator (10), said control system (40) comprising the classifier (60) trained with the method according to any one of claims 1 to 7 and being configured to operate said actuator (10) in accordance with an output of said classifier (60).

14. Control system (40) that is configured to carry out the method according to any one of claims 8 to 10.

15. Training system (140) that is configured to carry out the method according to any one of claims 1 to 7.

**Fig. 1**

EP 3 798 913 A1

EP 3 798 913 A1

**Fig. 2**

Fig. 3

Fig. 4

**Fig. 5**

**Fig. 6**

**Fig. 7**

Fig. 8

Fig. 9

| | Europäisches Patentamt European Patent Office Office européen des brevets | **EUROPEAN SEARCH REPORT** | Application Number EP 19 19 9318 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRATYUSH MAINI ET AL: "Adversarial Robustness Against the Union of Multiple Perturbation Models", ARXIV.ORG, CORNELL UNIVERSITY LIBRARY, 201 OLIN LIBRARY CORNELL UNIVERSITY ITHACA, NY 14853, 9 September 2019 (2019-09-09), XP081475731, * the whole document * * page 3 - page 8 * * page 12 - page 15 * ----- | 1-15 | INV. G06N3/04 G06N3/08 |
| A | Florian Tramèr ET AL: "Adversarial Training and Robustness for Multiple Perturbations", , 29 April 2019 (2019-04-29), XP055678586, Retrieved from the Internet: URL:https://arxiv.org/pdf/1904.13000v1.pdf [retrieved on 2020-03-23] * the whole document * ----- | 1-15 | |
| A | JINKYU KOO ET AL: "HAWKEYE: Adversarial Example Detector for Deep Neural Networks", ARXIV.ORG, CORNELL UNIVERSITY LIBRARY, 201 OLIN LIBRARY CORNELL UNIVERSITY ITHACA, NY 14853, 22 September 2019 (2019-09-22), XP081480134, * the whole document * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 23 March 2020 | Tsakonas, Athanasios |

EPO FORM 1503 03.82 (P04C01)

Europäisches
Patentamt

European
Patent Office

Office européen
des brevets

**EUROPEAN SEARCH REPORT**

Application Number

EP 19 19 9318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MANDLEKAR AJAY ET AL: "Adversarially Robust Policy Learning: Active construction of physically-plausible perturbations", 2017 IEEE/RSJ INTERNATIONAL CONFERENCE ON INTELLIGENT ROBOTS AND SYSTEMS (IROS), IEEE, 24 September 2017 (2017-09-24), pages 3932-3939, XP033266396, DOI: 10.1109/IROS.2017.8206245 [retrieved on 2017-12-13] * the whole document * | 1-15 | |
| A | CONSTANTINOS DASKALAKIS ET AL: "Training GANs with Optimism", ARXIV.ORG, CORNELL UNIVERSITY LIBRARY, 201 OLIN LIBRARY CORNELL UNIVERSITY ITHACA, NY 14853, 31 October 2017 (2017-10-31), XP080833398, * the whole document * | 1-15 | |

TECHNICAL FIELDS
SEARCHED    (IPC)

The present search report has been drawn up for all claims

| Place of search | Date of completion of the search | Examiner |
|---|---|---|
| The Hague | 23 March 2020 | Tsakonas, Athanasios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10007866 BB

**Non-patent literature cited in the description**

- **JAN HENDRIK METZEN.** *Defending Against Universal Perturbations With Shared Adversarial Training*
- **IAN J GOODFELLOW ; JONATHON SHLENS ; CHRISTIAN SZEGEDY.** *Explaining and harnessing adversarial examples,* 2014
- **ALEXEY KURAKIN ; IAN GOODFELLOW ; SAMY BENGIO.** *Adversarial examples in the physical world,* 2016
- **ALEKSANDER MADRY ; ALEKSANDAR MAKELOV ; LUDWIG SCHMIDT ; DIMITRIS TSIPRAS ; ADRIAN VLADU.** *Towards deep learning models resistant to adversarial attacks,* 2017
- **YINPENG DONG ; FANGZHOU LIAO ; TIANYU PANG ; HANG SU ; JUN ZHU ; XIAOLIN HU ; JIANGUO LI.** *Boosting Adversarial Attacks with Momentum,* 2018
- **YUZHE YANG ; GUO ZHANG ; DINA KATABI ; ZHI XU.** *Me-net: Towards effective adversarial robustness with matrix estimation,* 2019
- **MARIUS MOSBACH ; MAKSYM ANDRIUSHCHENKO ; THOMAS TROST ; MATTHIAS HEIN ; DIETRICH KLAKOW.** *Logit pairing methods can fool gradient-based attacks,* 2018
- **ALI SHAFAHI ; MAHYAR NAJIBI ; AMIN GHIASI ; ZHENG XU ; JOHN DICKERSON ; CHRISTOPH STUDER ; LARRY S DAVIS ; GAVIN TAYLOR ; TOM GOLDSTEIN.** *Adversarial training for free!,* 2019
- **CODY COLEMAN ; DEEPAK NARAYANAN ; DANIEL KANG ; TIAN ZHAO ; JIAN ZHANG ; LUIGI NARDI ; PETER BAILIS ; KUNLE OLUKOTUN ; CHRIS RE ; MATEI ZAHARIA.** Dawnbench: An end-to-end deep learning benchmark and competition. *Training,* 2017, vol. 100 (101), 102
- **LESLIE N. SMITH ; NICHOLAY TOPIN.** *Super-Convergence: Very Fast Training of Neural Networks Using Large Learning Rates*
- **PAULIUS MICIKEVICIUS ; SHARAN NARANG ; JONAH ALBEN ; GREGORY DIAMOS ; ERICH ELSEN ; DAVID GARCIA ; BORIS GINSBURG ; MICHAEL HOUSTON ; OLEKSII KUCHAIEV ; GANESH VENKATESH et al.** *Mixed precision training,* 2017
- **CONSTANTINOS DASKALAKIS ; ANDREW ILYAS ; VASILIS SYRGKANIS ; HAOYANG ZENG.** *Training GANs with Optimism*
- **GM KORPELEVICH.** The extragradient method for finding saddle points and other problems. *Matecon,* 1976, vol. 12, 747-756